Europäisches Patentamt

European Patent Office

Office européen des brevets

(19)

(11) Numéro de publication : **0 074 451**
**B1**

(12) **FASCICULE DE BREVET EUROPÉEN**

(45) Date de publication du fascicule du brevet :
03.04.85

(51) Int. Cl.⁴ : **A 01 D 43/10**

(21) Numéro de dépôt : **81401402.3**

(22) Date de dépôt : **09.09.81**

(54) **Machine de conditionnement de produits de récolte telle que faucheuse-conditionneuse ou ramasseuse-condition-neuse.**

(43) Date de publication de la demande :
**23.03.83 Bulletin 83/12**

(45) Mention de la délivrance du brevet :
**03.04.85 Bulletin 85/14**

(84) Etats contractants désignés :
**AT CH DE FR GB LI NL SE**

(56) Documents cités :
**EP-A- 0 028 045**
**FR-A- 2 107 042**
**FR-A- 2 408 992**
**US-A- 3 896 609**

(73) Titulaire : **JOHN DEERE (Société Anonyme)**
**8, Quai de la Madeleine**
**F-45000 Orléans (FR)**

(72) Inventeur : **Gold, Ralph C.**
**9, rue Sonjour**
**F-70100 Gray-La-Ville (FR)**
Inventeur : **Diot, Joël André**
**Les Crayes**
**F-70100 Chargey-les-Gray (FR)**

(74) Mandataire : **Pruvost, Marc Henri et al**
**Cabinet ORES 6, Avenue de Messine**
**F-75008 Paris (FR)**

EP 0 074 451 B1

Jouve, 18, rue St-Denis, 75001 Paris, France

### Description

La présente invention se rapporte d'une façon générale aux faucheuses-conditionneuses, ramasseuses-conditionneuses ou machines analogues.

Les faucheuses-conditionneuses comportent des moyens de coupe fauchant les produits de récolte sur pied tels que le fourrage et soumettant ces produits à un conditionnement avant de les déposer sur le sol en andain pour leur séchage et leur reprise ultérieure. Ces machines, qui sont le plus souvent attelées à un tracteur mais qui peuvent également être automotrices, comportent à la partie avant d'un châssis une barre de coupe qui peut être une lame animée d'un mouvement de va-et-vient, du type à disques ou d'un type analogue.

Il est prévu sur le châssis de la machine, en arrière de cette barre de coupe, un dispositif de conditionnement, qui reçoit les produits de récolte fauchés et qui peut être formé par des rouleaux ou cylindres, le plus souvent cannelés ou profilés, ou bien par un rotor muni de palettes, de doigts ou analogues, qui est entraîné à un,e vitesse de rotation élevée. Ce rotor coopère généralement avec un capot profilé pour, d'une part, soumettre les produits de récolte à un conditionnement en brisant les tiges pour permettre un meilleur séchage et pour, d'autre part, projeter les produits conditionnés vers l'arrière de la machine, où ils sont dirigés vers le sol afin de se déposer en andain par un déflecteur de forme appropriée.

Dans les ramasseuses-conditionneuses, le mécanisme de coupe est remplacé par un ramasseur, dont la fonction est simplement de ramasser sur le sol des produits de récolte déjà coupés, pour les soumettre à un conditionnement. Les organes conditionneurs peuvent, dans ce cas, être du même type général que précédemment. Les produits ramassés et conditionnés sont alors déposés à nouveau sur le sol en andain, pour leur reprise par exemple par une presse à balles.

Il est connu dans cette technique d'utiliser pour former le dispositif de conditionnement divers types de rotors dont les uns comportent un tambour muni sur sa périphérie d'ailettes ou de palettes, tandis que les autres sont formés par un arbre portant des éléments en forme de pattes ou de chapes pour le montage à articulation de doigts ou fléaux. Ces derniers peuvent avoir eux-mêmes différentes formes, et il est connu par exemple, pour améliorer l'efficacité du conditionnement, de leur donner une forme générale en V, ou bien de les constituer par une tige terminée par une partie en V.

Dans le cas de faucheuses-conditionneuses comportant une barre de coupe du type à disques et un dispositif de conditionnement formé par un rotor, il est connu en particulier, par le brevet français FR-A-2 408 992, de concentrer les doigts ou fléaux sur la longueur du rotor dans les parties de celui-ci situées d'une façon générale en face des intervalles ménagés entre des paires de disques contra-rotatifs de la barre de coupe, et plus spécialement en face des intervalles au droit desquels les périphéries des disques voisins se déplacent de l'avant vers l'arrière. On a constaté en effet qu'il se produit dans ces zones, sur la longueur de la barre de coupe, une concentration des produits, de sorte que l'augmentation du nombre des éléments de conditionnement dans ces zones compense cette concentration et permet en conséquence d'obtenir un meilleur conditionnement.

Pour tenir compte de la tendance actuelle du machinisme agricole, qui est d'augmenter l'efficacité et le rendement, on a déjà proposé de réaliser des faucheuses-conditionneuses ou des ramasseuses-conditionneuses comportant une barre de coupe ou un ramasseur de grande largeur tout en étant capables de former en arrière de la machine un andain de largeur plus faible. Ceci permet de travailler dans le champ sur une largeur de fauchage ou de ramassage importante, tout en obtenant en arrière de la machine un andain de largeur usuelle, pouvant être repris facilement par des machines classiques telles que des presses par exemple. Pour parvenir à ce résultat, il a été proposé, notamment dans le brevet US 3 474 602, dans les demandes de brevets allemands 1 482 242 et 2 104 512 et dans la demande de brevet européen 0 028 045, de prévoir sur la machine en arrière de la barre de coupe ou du ramasseur, mais devant le dispositif de conditionnement, une vis transporteuse transversale dont les parties latérales présentent des filets de sens opposés de manière à réaliser, lorsque cette vis transporteuse est entraînée en rotation, un déplacement des produits de récolte vers le centre de la machine. Ceci permet de monter en arrière d'une barre de coupe ou d'un ramasseur de grande largeur un dispositif de conditionnement de largeur normale, correspondant en principe à la largeur de l'andain devant être formé sur le sol par les produits de récolte.

Les recherches de la Société Demanderesse ont toutefois montré que, dans un tel cas, l'efficacité ou la qualité du conditionnement réalisé par la machine était moins bonne et en fait irrégulière. Ces recherches ont montré que cette irrégularité dans le conditionnement provient du fait qu'il résulte du déplacement des produits de récolte vers le centre de la machine par la vis transporteuse une absence d'uniformité de débit sur la largeur du dispositif de conditionnement, et en fait que la densité de produits est plus grande vers les côtés de ce dispositif de conditionnement qu'en son centre. Ceci s'explique par le fait que la partie centrale du dispositif de conditionnement reçoit les produits provenant d'une partie centrale en principe de même étendue transversale de la barre de coupe, tandis qu'il se produit, vers les côtés du dispositif de conditionnement, une accumulation de produits qui sont amenés à ce dispositif, de chaque côté, par la vis transporteuse.

Le but de l'invention est d'apporter une solution au problème ainsi posé et de créer une faucheuse-conditionneuse ou ramasseuse-conditionneuse du type à barre de coupe ou ramasseur de grande largeur fournissant un conditionnement uniforme des produits de récolte.

L'invention concerne une machine de conditionnement de produits de récolte, telle que faucheuse-conditionneuse ou ramasseuse-conditionneuse, comprenant une barre de coupe ou un ramasseur de grande largeur disposé transversalement à la direction de déplacement de la machine, une vis transporteuse transversale prévue en arrière de cette barre de coupe ou de ce ramasseur quand on considère cette direction de déplacement de la machine et présentant des filets latéraux de sens opposés pour concentrer les produits de récolte fauchés ou ramassés parvenant à cette vis transporteuse vers la partie centrale de la machine, et un dispositif de conditionnement formé par un rotor, monté dans cette partie centrale de la machine en arrière de cette vis transporteuse et garni d'éléments de conditionnement, caractérisée en ce que ces éléments de conditionnement sont répartis sur la longueur du rotor de conditionnement selon une disposition plus dense vers les extrémités dudit rotor que dans sa partie médiane. Ainsi, le nombre des éléments de conditionnement par unité de longueur du rotor est plus élevé vers les extrémités de ce rotor que vers son centre.

Suivant une réalisation possible, les éléments de conditionnement sont disposés sur le rotor en rangées s'étendant axialement par rapport à ce rotor et, dans ce cas, l'écartement axial entre les éléments voisins est plus faible vers les extrémités du rotor que dans sa partie médiane.

Mais on peut également si désiré, prévoir entre des rangées axiales d'éléments de conditionnement répartis selon un écartement uniforme sur la longueur du rotor d'autres rangées intercalaires d'éléments de conditionnement ne comportant de tels éléments de conditionnement que dans les parties du rotor voisines de ses extrémités, ce qui augmente ainsi la densité en éléments de conditionnement vers lesdites extrémités du rotor.

Il va de soi toutefois que ces deux possibilités peuvent également être combinées, c'est-à-dire que l'on peut prévoir des rangées axiales d'éléments de conditionnement dans lesquelles lesdits éléments de conditionnement présentent un « pas » ou écartement plus faible vers les extrémités du rotor, et des rangées intercalaires ne comportant de tels éléments de conditionnement que vers ces extrémités du rotor.

Lorsque de telles rangées intercalaires sont prévues, les éléments de conditionnement qui les constituent sont judicieusement disposés en quinconce par rapport aux éléments de conditionnement des autres rangées.

Mais la répartition des éléments de conditionnement sur le rotor pourrait être également choisie de façon différente, à la condition d'obtenir cette densité plus grande en éléments de conditionnement vers les extrémités du rotor. Ainsi, les éléments de conditionnement pourraient, si désiré, être distribué selon des lignes d'éléments s'étendant en hélice autour du noyau, du fût ou de l'arbre du rotor.

Suivant une particularité de l'invention, la densité d'éléments de conditionnement varie sur la longueur du rotor sensiblement en fonction de la quantité de produits de récolte parvenant au rotor dans chaque partie de cette longueur. Une telle variation de densité peut être déterminé par voie empirique.

La variation de densité en éléments de conditionnement peut être sensiblement progressive sur la longueur du rotor, de puis son centre vers ses extrémités, ou bien elle peut varier par paliers ou sections, la longueur du rotor pouvant dans ce cas être subdivisée par exemple en trois ou cinq sections, à savoir une section centrale comportant un petit nombre d'éléments de conditionnement, et de chaque côté, une ou deux sections latérales garnies d'un nombre plus grand d'éléments de conditionnement, ce nombre augmentant d'une section à l'autre en direction de l'extrémité correspondante du rotor de conditionnement.

Les recherches effectuées ont montré que l'on remédie de cette manière aux inconvénients précités résultant de l'irrégularité de conditionnement des produits de récolte et que l'on obtient au contraire une bonne uniformité de conditionnement de tous les produits fauchés ou ramassés.

Les éléments de conditionnement peuvent être de tout type désiré. Ils peuvent être formés, par exemple, par des pattes ou palettes portés par un noyau ou fût de rotor. Mais un résultat particulièrement avantageux paraît être obtenu avec un rotor de conditionnement formé par un arbre portant des doigts ou fléaux articulés sur lui, notamment des doigts ou fléaux à parties active en V.

La description qui va suivre, faite en regard du dessin annexé, donné à titre non limitatif, permettra de mieux comprendre l'invention.

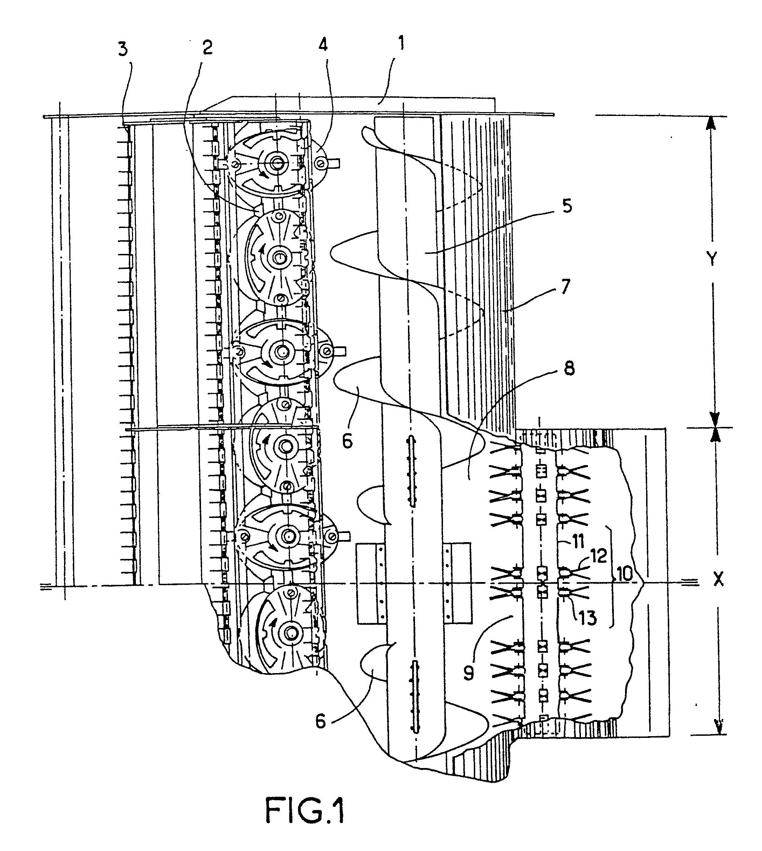

La Figure 1 est une vue partielle en plan avec arrachement d'une faucheuse-conditionnement suivant l'invention.

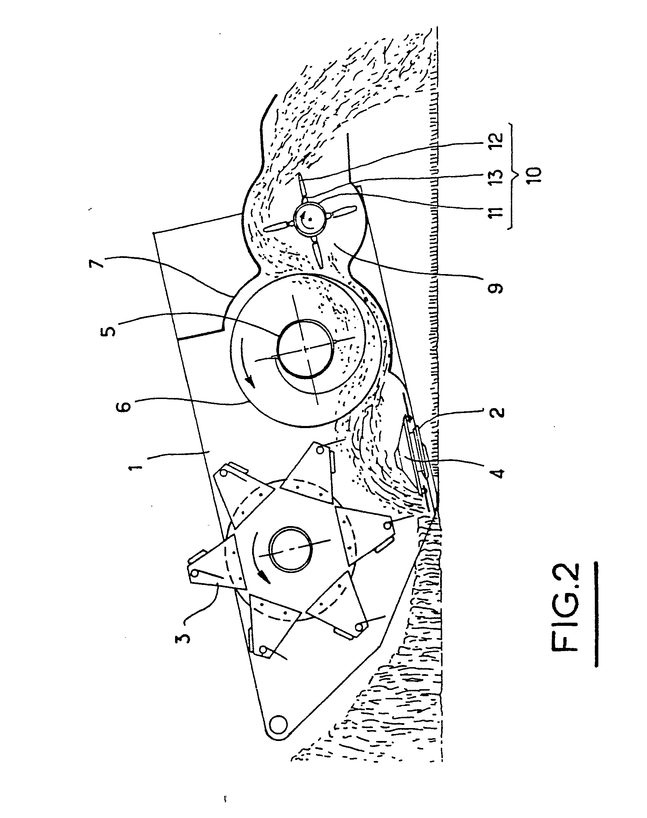

La Figure 2 est une vue en coupe verticale partielle correspondante.

Sur le dessin, on a indiqué schématiquement en 1 le châssis ou corps d'une fauheuse-conditionneuse, qui porte à sa partie avant une barre de coupe désignée d'une façon générale par la référence 2, conjuguée à un rabatteur 3. Cette barre est formée dans le cas présent par des disques contra-rotatifs 4 qui fauchent les produits de récolte sur pied, par exemple le fourrage, au cours de la progression de la machine, laquelle peut être attelé à un tracteur ou être de type automoteur.

D'une manière en soi connue, il est prévu en arrière de la barre de coupe 2 une vis transporteuse 5 qui présente dans ses parties latérales des filets 6 de sens opposés.

Le corps 1 de la machine comprend dans une paroi arrière 7 enveloppant partiellement la vis transporteuse, un orifice de sortie 8 de largeur inférieure à la largeur de la machine et ménageant un passage 9 dans lequel est monté un rotor de conditionnement 10 qui, dans le cas considéré ici, comprend un arbre 11 sur lequel des doigts ou fléaux 12 ayant une forme générale en V sont articulés par des chapes 13.

Tous ces éléments d'une faucheuse-conditionneuse sont en soi connus. Les produits fauchés sont transférés par des moyens non représentés à la vis transporteuse 5. Compte tenu de la présences des filets latéraux de sens opposés de la vis 5, les produits de récolte parvenant dans les parties latérales de cette vis transporteuse sont ramenés vers le centre de la machine et sont ainsi transférés par l'orifice de passage 8 au rotor de conditionnement 10. Au cours de leur conditionnement, les produits sont projetés vers l'arrière à l'intérieur d'un capot (non représenté) et sont déposés sur le sol en andain à l'arrière de la machine par un déflecteur (également non représenté).

Une faucheuse-conditionneuse de ce type permet d'effectuer le fauchage sur une grande largeur de travail tout en obtenant, après le passage de la machine, un andain de largeur usuelle, permettant une reprise aisée des produits par exemple par une presse à balles. La concentration est réalisée par la vis transporteuse 5.

On a constaté toutefois dans la pratique, avec les machines de ce type, une irrégularité dans le dégré de conditionnement des produits de récolte.

Ce phénomène peut s'expliquer par le fait que, si l'on divise artificiellemnt la largeur de la machine en une zone centrale X ayant une largeur correspondant à la largeur de l'orifice de passage 8, c'est-à-dire en fait du rotor de conditionnement 10, et en deux zones latérales Y s'étendant depuis les extrémités de la zone X jusqu'aux côtés de la machine, on voit que les produits de récolte fauchés dans la zone centrale de largeur X parviennent sensiblement directement au rotor de conditionnement 10, tandis que les produits fauchés dans les zones latérales Y sont reçus par les parties latérales de la vis transporteuse 5 et sont concentrés par celles-ci vers la partie centrale de la machine, mais ne parviennent pas jusqu'en son milieu et sont en fait transférés au rotor de conditionnement 10 à travers l'orifice de passage 8 vers les côtés de celui-ci.

Dans la pratique, ce phénomène n'est pas aussi simple, étant donné que, dans le cas d'une barre de coupe à disques en particulier, il se produit déjà une certaine concentration des produits entre des paires de disques contra-rotatifs, au droit des intervalles dans lesquels les périphéries de ces disques tournent de l'avant vers l'arrière, mais considérée d'une façon générale l'explication ci-dessus s'applique au phénomène d'irrégularité constaté.

En conséquence, la densité des produits de récolte est nettement plus grande sur les côtés de l'orifice de passage 8, c'est-à-dire vers les extrémités du rotor de conditionnement, qu'au milieu de cet orifice ou de ce rotor.

Pour tenir compte de ce fait, les doigts ou fléaux de conditionnement 12 sont, suivant l'invention, répartis sur la longeur du rotor selon une distribution plus dense vers les extrémités de ce rotor que dans sa partie médiane.

Cette variation de distribution des doigts ou fléaux de conditionnement a été illustrée de façon schématique sur le dessin.

Ainsi, le nombre des éléments de conditionnement est en fait adapté à la densité ou quantité de produits de récolte dans chaque « tranche » du canal de passage 8 ou du rotor de conditionnement 10 considérée dans le sens longitudinal de la machine et cette densité de répartition augmente depuis le centre du rotor 10 vers ses extrémités.

Comme indiqué précédemment, la détermination de la densité optimum des doigts ou fléaux de conditionnement sur la longueur du rotor peut être faite de façon empirique.

Etant donné qu'une quantité plus grande de produits de récolte est soumise à l'effet d'un nombre plus élevé de doigts ou fléaux de conditionnement, il en résulte en tous les points de la longueur du rotor sensiblement une efficacité de conditionnement uniforme, ce qui améliore ainsi la qualité des produits résultants.

Comme indiqué précédemment, de nombreuses possibilités apparaîtront aux techniciens en ce qui concerne la répartition des éléments de conditionnement, tels que les doigts ou fléaux, sur le rotor.

## Revendications

1. Machine de conditionnement de produits de récolte, telle que faucheuse-conditionneuse ou ramasseuse-conditionneuse, comprenant une barre de coupe (2) ou un ramasseur de grande largeur disposé transversalement à la direction de déplacement de la machine, une vis transporteuse transversale (5) prévue en arrière de cette barre de coupe ou de ce ramasseur quand on considère cette direction de déplacement de la machine et présentant des filets latéraux (6) de sens opposés pour concentrer les produits de récolte fauchés ou ramassée parvenant à cette vis transporteuse vers la partie de la machine, et un dispositif de conditionnement (10) formé par un rotor, monté dans cette partie centrale de la machine en arrière de cette vis transporteuse et garni d'éléments de conditionnement (12), caractérisée en ce que ces éléments de conditionnement (12) sont répartis sur la longeur du rotor de conditionnement (10) selon une disposition plus dense vers les extrémités dudit rotor que dans sa partie médiane.

2. Machine suivant la revendication 1 dans laquelle les éléments de conditionnement (12) sont disposés sur le rotor (10) en rangées s'étendant axialement par rapport à ce rotor, caractérisée en ce que l'écartement axial entre les éléments de conditionnement voisins (12) est plus faible vers les extrémités du rotor que dans sa partie médiane.

3. Machine suivant la revendication 1 dans laquelle les éléments de conditionnement (12) sont disposés sur le rotor (10) en rangées s'étendant axialement par rapport à ce rotor, caractérisée en ce qu'il est prévu, entre ces rangées axiales d'éléments de conditionnement (12), d'autres rangées intercalaires d'éléments de conditionnement, ne comportant de tels éléments que dans les parties du rotor (10) voisines de ses extrémités.

4. Machine suivant la revendication 3, caractérisée en ce que les éléments de conditionnement (12) sont, dans les premières rangées axiales, répartis selon un écartement uniforme sur la longueur du rotor (10).

5. Machine suivant la revendication 3, caractérisée en ce que les éléments de conditionnement (12) sont, dans les premières rangées axiales, disposés selon un écartement axial entre les éléments voisins plus faible vers les extrémités du rotor (10) que dans sa partie médiane.

6. Machine suivant l'une quelconque des revendications 3 à 5, caractérisée en ce que les éléments de conditionnement (12) des rangées intercalaires sont disposés en quinconce par rapport aux éléments de conditionnement des autres rangées.

7. Machine suivant la revendication 1, caractérisée en ce que les éléments de conditionnement (12) sont, sur le rotor (10), distribués selon des lignes d'éléments s'étendant en hélice autour du noyau, du fût ou de l'arbre (11) du rotor, l'écartement entre des paires d'éléments voisins diminuant du centre vers les extrémités de ce rotor.

8. Machine suivant l'une quelconque des revendications précédentes, caractérisée en ce que la densité des éléments de conditionnement (12) varie sur la longueur du rotor (10) sensiblement en fonction de la quantité de produits de récolte parvenant au rotor dans chaque partie de cette longueur.

9. Machine suivant l'une quelconque des revendications précédentes, caractérisée en ce que la variation de densité en éléments de conditionnement (12) est progressive sur la longueur du rotor (10), depuis son centre vers ses extrémités.

10. Machine suivant l'une quelconque des revendications 1 à 8, caractérisée en ce que la variation de densité en éléments de conditionnement (12) s'effectue par paliers dans des sections successives du rotor.

## Claims

1. A machine for conditioning crop products such as a harvesting conditioning machine or pick-up conditioning machine, comprising a cutter bar (2) or a pick-up means of substantial width which is disposed transversely to the direction of movement of the machine, a transverse conveyor screw (5) disposed rearwardly of said cutter or said pick-up means when considering said direction of movement of the machine and having lateral pitches (6) of opposite directions for concentrating the reaped or picked-up crop products which are supplied to the conveyor screw, towards the central portion of the machine, and a conditioning device (10) formed by a rotor mounted in said central portion of the machine rearwardly of said conveyor screw and provided with conditioning elements (12), characterised in that said conditioning elements (12) are distributed over the length of the conditioning rotor (10) in accordance with an arrangement which is more dense towards the ends of said rotor than in the middle portion thereof.

2. A machine according to claim 1, wherein said conditioning element (12) are disposed on the rotor (10) in rows extending axially with respect to said characterised in that the axial spacing between the adjacent conditioning elements (12) is smaller the ends of the rotor in the middle portion thereof.

3. A machine according to claim 1, wherein the conditioning elements (12) are disposed on the rotor (10) in rows extending axially with respect to said rotor characterised in that between said axial rows of conditioning elements (12) are disposed other interposed rows of conditioning element comprising such elements only in the portions of the rotor (10) which are adjacent to the ends thereof.

4. A machine according to claim 3, characterised in that the conditioning elements (12), in the first axial rows, are distributed at a uniform spacing over the length of the rotor (10).

5. A machine according to claim 3, characterised in that the conditioning elements (12), in the first axial rows, are disposed at an axial spacing between the adjacent elements which is smaller towards the ends of the rotor (10) than in the middle portion thereof.

6. A machine according to any one of claims 3 to 5, characterised in that the conditioning elements (12) of the interposed rows are disposed in a staggered arrangement with respect to the conditioning elements of the other rows.

7. A machine according to claim 1, characterised in that the conditioning element (12), are distributed on the rotor (10) along lines of elements extending in a helical configuration around the hub, body or shaft (11) of the rotor, the spacing between pairs of adjacent elements decreasing from the centre towards the ends of said rotor.

8. A machine according to any one of the preceding claims, characterised in that the density of the conditioning elements (12) varies over the length of the rotor (10) substantially in dependence on the quantity of crop products which reach the rotor in each part of the length thereof.

9. A machine according to any one of the preceding claims, characterised in that the variation in density of the conditioning elements (12) is progressive over the length of the rotor (10) from the centre thereof towards the ends thereof.

10. A machine according to any one of claims 1 to 8, characterised in that the variation in density of the conditioning elements (12) occurs in stages in successive sections of the rotor.

**Ansprüche**

1. Maschine zum Konditionieren von Ernteprodukten, wie Mäh-Konditionierungsmaschine oder Aufsammel-Konditionierungsmaschine, enthaltend einen Mähbalken (2) oder einen Aufsammler grosser Breite, die quer zur Bewegungsrichtung der Maschine angeordnet sind, eine quer angeordnete Förderschnecke (5), die hinter dem Mähbalken oder dem Aufsammler angeordnet ist, wenn man die Bewegeungsrichtung der Maschine in Betracht zieht, und die seitliche Schraubengänge (6) von entgegengesetztem Drehsinne aufweist, um die geschnittenen oder aufgesammelten Ernteprodukte, die zu der Förderschnecke gelangen, zum zentralen Bereich der Maschine hin zu konzentrieren, und eine Konditionierungsvorrichtung (10), die durch einen Rotor gebildet ist, der in diesem zentralen Bereich der Maschine dieser Transportschnecke angeordnet und mit Konditionierungselementen (12) versehen ist, dadurch gekennzeichnet, dass diese Konditionierungselemente (12) über die Länge des Konditionierungsrotors (10) gemäss einer Anordnung, die zu den Enden des genannten Rotors dichter ist als in seinem mittleren Bereich, verteilt sind.

2. Machine nach Anspruch 1, in der die Konditionierungselemente (12) auf dem Rotor (10) in Reihen angeordnet sind, die sich in bezug auf den Rotor axial erstrecken, dadurch gekennzeichnet, dass der axiale Abstand zwischen den benachbarten Konditionierungselementen (12) zu den Enden des Rotors hin kleiner als im mittleren Bereich ist.

3. Maschine nach Anspruch 1, in der die Konditionierungselemente (12) auf dem Rotor (10) in Reihen angeordnet sind, die sich in bezug auf den Rotor axial erstrecken, dadurch gekennzeichnet, dass zwischen den axialen reihen von Konditionierungselementen (12) weitere Zwischenreihen von Konditionierungselementen vorgesehen sind, die solche Elemente nur in den Bereichen des Rotors (10) in der Nähe seiner Enden aufweisen.

4. Maschine nach Anspruch 3, dadurch gekennzeichnet, dass die Konditionierungselemente (12) in den ersten axialen Reihen entsprechend einem gleichförmigen Abstand auf der Länge der Rotors (10) verteilt sind.

5. Maschine nach Anspruch 3, dadurch gekennzeichnet, dass die Konditionierungselemente (12) der ersten axialen Reihen gemäss einem axialen Abstand zwischen den benachbaten Elementen angeordnet sind, der zu den Enden des Rotors (10) kleiner ist als im mittleren Bereich.

6. Maschine nach irgendeinem der Ansprüche 3 bis 5, dadurch gekennzeichnet, dass die Konditionierungselemente (12) der Zwischenreihen gegenüber den Konditionierungselementen der anderen Reihen versetzt angeordnet sind.

7. Maschine nach Anspruch 1, dadurch gekennzeichnet, dass die Konditionierungselemente (12) auf dem Rotor (10) gemäß Elementenlinien verteilt sind, sich schraubenförmig um den Kern, den Schaft oder die Welle (11) des Rotors erstrecken, wobei der Abstand zwischen benachbarten Paaren der Elemente sich von der Mitte zu den Enden des Rotors hin verringert.

8. Maschine nach irgendeinem der voranstehenden Ansprüche, dadurch gekennzeichnet, dass die Dichte der Konditionierungselemente (12) auf der Länge des Rotors (10) deutlich in Abhängigkeit von der Menge der Ernteprodukte varriert, die in jedem Bereich dieser Länge zu dem Rotor gelangt.

9. Maschine nach irgendeinem der voranstehenden Ansprüche, dadurch gekennzeichnet, dass die Änderung der Dichte der Konditionierungselemente (12) auf der Länge der Rotors (10) von seiner Mitte zu seinen Enden hin progressiv ist.

10. Maschine nach irgendeinem der Ansprüche 1 bis 8, dadurch gekennzeichnet, dass die Änderung der Dichte der Konditionierungselemente (12) sich in den aufeinanderfolgenden Abschnitten der Rotors schrittweise vollzieht.

FIG.1

FIG.2

0 074 451